# EUROPÄISCHE PATENTANMELDUNG

(11) **EP 3 062 255 A1**
(43) Veröffentlichungstag der Anmeldung: **31.08.2016**
(21) Anmeldenummer: 15156554.6
(22) Anmeldetag: 25.02.2015
(51) Int. Cl.: G06F 21/12

(54) **Lizensierung von Softwareprodukten**

(71) Anmelder: Siemens Aktiengesellschaft, 80333 München (DE)
(72) Erfinder: Burkhardt, Alexander, 75378 Bad Liebenzell (DE); May, Benjamin, 71272 Renningen (DE)

(57) **Zusammenfassung**

Die Erteilung einer Zugriffsberechtigung eines Anwendungsclient (AC) für ein auf einem Anwendungsserver (AS1, AS2) bereitgestelltes Softwareprodukt (SP1, SP2) soll verbessert werden. Hierzu ist vorgesehen, dass ein Lizenzserver (LS) ein Lizenztoken erstellt, elektronisch signiert und an den Anwendungsclient (AC) übermittelt, der seinerseits das Lizenztoken an den Anwendungsserver (AS1, AS2) überträgt. Da der Anwendungsclient (AC) seine Zugriffsberechtigung für den Zugriff auf das Softwareprodukt (SP1, SP2) beim Aufruf des Softwareproduktes (SP1, SP2) mitliefert, ist eine schnelle und effiziente Überprüfung der Zugriffsberechtigung möglich, auch ohne Verbindung zwischen dem Lizenzserver (LS) und dem Anwendungsserver (AS1, AS2) während des Aufrufs.

## Beschreibung

Die Erfindung betrifft ein Verfahren zur Erteilung einer Zugriffsberechtigung für ein auf einem Anwendungsserver bereitgestelltes Softwareprodukt sowie ein entsprechendes Computersystem zur Durchführung des Verfahrens.

Es sind bereits mehrere Verfahren bekannt, mittels derer ein Anwendungsclient auf ein auf einem Anwendungsserver bereitgestelltes Softwareprodukt zugreifen kann, wobei der Anwendungsclient und der Anwendungsserver über ein Netzwerk miteinander verbunden sind. Beispielsweise kann es zur Erteilung einer Zugriffsberechtigung notwendig sein, einen so genannten Schlüssel, in der Regel in Form einer bestimmten Zeichenfolge, bei dem Anwendungsclient einzugeben. Nachteilig dabei ist, dass hierzu die Information über einen gültigen Schlüssel bei dem Anwendungsclient bekannt sein muss.

Eine weitere Möglichkeit besteht in der physikalischen Übertragung des Lizenzschlüssels auf ein Speichermedium des Anwendungsclients, das durch aufwändige technische Maßnahmen kopiergeschützt wurde.

Weiterhin ist bekannt, dass beim Aufruf eines auf einem Anwendungsserver bereitgestellten Softwareprodukts durch einen Anwendungsclient der Anwendungsserver zunächst über das Netzwerk Kontakt mit einem Lizenzserver aufnimmt und abfragt, ob für den betreffenden Anwendungsclient und das betreffende Softwareprodukt eine Lizenz vorliegt. Weiterhin ist die Verwendung eines Hardware-Dongle bei dem Anwendungsclient bekannt, der gewöhnlich den Lizenzschlüssel und gegebenenfalls den zur Verifizierung der Lizenz benötigten Code enthält.

Die Zwischenschaltung eines Lizenzservers hat den Vorteil, dass zum Überprüfen der Zugriffsberechtigung kein direkter Kontakt zwischen dem Anwendungsserver und dem Anwendungsclient vorhanden sein muss.

Aufgabe der vorliegenden Erfindung ist es, die Erteilung einer Zugriffsberechtigung eines Anwendungsclients für ein auf einem Anwendungsserver bereitgestelltes Softwareprodukt unter Verwendung eines Lizenzservers zu erleichtern.

Diese Aufgabe wird durch ein Verfahren mit den in Patentanspruch 1 genannten Verfahrensschritten gelöst. Ferner wird diese Aufgabe durch ein Computersystem gemäß Patentanspruch 8 zur Durchführung eines entsprechenden Verfahrens gelöst.

Bisher musste ein Anwendungsserver vor einem Zugriff auf ein auf dem Anwendungsserver bereitgestelltes Softwareprodukt stets prüfen, ob eine Zugriffsberechtigung vorliegt. Hierzu wurde in der Regel entweder das Vorhandensein einer Lizenz bei einem Lizenzserver durch eine entsprechende Anfrage bei dem Lizenzserver geprüft oder es wurde geprüft, ob eine erforderliche Lizenz kopiergeschützt auf einem lokalen Speichermedium des Anwendungsclients vorgehalten wird.

Im Unterschied dazu sieht die Erfindung vor, dass bei einem Aufruf eines auf einem Anwendungsserver bereitgestellten Softwareproduktes durch einen Anwendungsclient zunächst der Anwendungsserver dem Anwendungsclient mitteilt, welche Lizenz für den geplanten Zugriff erforderlich ist. Daraufhin fordert der Anwendungsclient die erforderliche Lizenz über das Netzwerk von einem Lizenzserver an. Der Lizenzserver erstellt seinerseits ein sogenanntes Lizenztoken, aus dem hervorgeht, ob und gegebenenfalls welche Lizenz der Anwendungsclient in Bezug auf das auf den Anwendungsserver bereitgestellte Softwareprodukt hat. Damit der Anwendungsserver die Möglichkeit hat, die Korrektheit des Lizenztokens zu überprüfen, wird dieses von dem Lizenzserver mit einer elektronischen Signatur versehen und an den Anwendungsclient übermittelt. Der Anwendungsclient übermittelt seinerseits das elektronisch signierte Lizenztoken an den Anwendungsserver. Anhand der elektronischen Signatur kann der Anwendungsserver die Echtheit des übermittelten Lizenztoken überprüfen und im Falle einer gültigen Lizenz dem Anwendungsclient die Zugriffsberechtigung für den Zugriff auf das bereitgestellte Softwareprodukt erteilen.

Die erfindungsgemäße Vorgehensweise hat den Vorteil, dass nicht der Anwendungsserver das Vorhandensein einer gültigen Lizenz bei dem Lizenzserver erfragen muss, sondern der Anwendungsclient selbst die benötigte Lizenzinformation mitliefert. Der Anwendungsserver muss daher zum Überprüfen der Lizenz keinen direkten Zugriff auf den Lizenzserver haben. Ebenso wenig müssen aufwendige Verfahren zur Speicherung und Übertragung nicht kopierbarer Lizenzschlüssel-Dateien implementiert werden.

Vorteilhaft sind die von dem Lizenzserver erstellten Lizenztoken nur für kurze Zeit gültig, so dass damit ein Missbrauch praktisch ausgeschlossen werden kann.

Gemäß einer vorteilhaften Ausführungsform der Erfindung verwendet der Lizenzserver zur elektronischen Signatur des Lizenztokens einen geheimen Signaturschlüssel und der Anwendungsserver verifiziert die Echtheit des Lizenztokens mittels eines öffentlichen Signaturschlüssels des Lizenzservers. Damit ist es möglich, dass der Anwendungsserver der Quelle der Lizenz vertrauen kann.

Eine bevorzugte Ausführungsform der Erfindung sieht vor, dass der öffentliche Signaturschlüssel des Lizenzservers zusammen mit dem elektronisch signierten Lizenztoken von dem Lizenzserver über den Anwendungsclient zu dem Anwendungsserver übertragen wird. Auch dies trägt dazu bei, dass es zur Überprüfung der Zugriffsberechtigung nicht erforderlich ist, dass hierzu eine Verbindung zwischen dem Lizenzserver und dem Anwendungsserver besteht.

Eine Ausführungsform der Erfindung sieht mehrere Anwendungsserver vor, wobei sich der Aufruf des Anwendungsclient an einen ersten Anwendungsserver richtet, das aufgerufene Softwareprodukt jedoch auf einem zweiten Anwendungsserver gespeichert ist. In diesem Fall wird zunächst der Aufruf des Softwareproduktes von dem ersten Anwendungsserver an den zweiten Anwendungsserver weitergeleitet. Der zweite Anwendungsserver antwortet mit dem für den Zugriff auf das betreffende Softwareprodukt erforderlichen Lizenz und fordert diese von dem ersten Anwendungsserver an. Der erste Anwendungsserver leitet seinerseits die Anforderung der erforderlichen Lizenz an den Anwendungsclient weiter, der die Lizenzanfrage an den Lizenzserver weitergibt. Daraufhin packt der Lizenzserver die Informationen über die Lizenz des Anwendungsclient in Bezug auf das betreffende Softwareprodukt in einen Lizenztoken, versieht diesen mit einer elektronischen Signatur und übermittelt ihn über den Anwendungsclient und den ersten Anwendungsserver an den zweiten Anwendungsserver. Selbstverständlich kann diese Kette analog auch auf mehr als zwei Anwendungsserver erweitert werden. Der Vorteil des erfindungsgemäßen Verfahrens ist, dass der Lizenztoken in der beschriebenen Weise einfach bis zu dem letzten Anwendungsserver in der Kette durchgereicht werden kann. Anhand der mitgelieferten Signatur kann auch der letzte Anwendungsserver in der Kette stets die Korrektheit des mitgelieferten Lizenztokens verifizieren.

Eine Ausführungsform der Erfindung sieht vor, dass zwischen dem Lizenzserver und dem Anwendungsserver bzw. den Anwendungsservern einmalig ein "Vertrauensverhältnis" aufgebaut wird. Dies kann vorteilhaft dann erfolgen, wenn Lizenzinformationen des Anwendungsservers in Bezug auf das Softwareprodukt bei dem Lizenzserver hinterlegt werden. Dies erfolgt vorteilhaft vor einem ersten Aufruf des Softwareproduktes durch einen Anwendungsclient. Das Vertrauensverhältnis kann beispielsweise dadurch aufgebaut werden, das der Lizenzserver seinen öffentlichen Signaturschlüssel an den Anwendungsserver überträgt. Dieser Aufbau eines Vertrauensverhältnisses vor der Abfrage einer Zugriffsberechtigung in Form einer Lizenz hat den Vorteil, dass bei einer späteren Abfrage einer Zugriffsberechtigung eine Verbindung zwischen dem Lizenzserver und dem Anwendungsserver nicht mehr erforderlich ist.

Eine Ausführungsform der Erfindung sieht vor, dass es sich bei dem Softwareprodukt um einen Webservice handelt. Dabei bezeichnet ein Webservice eine Softwareanwendung, die über ein Netzwerk für eine direkte Maschine-zu-Maschine Interaktion bereitgestellt wird. Der Zugriff auf Webservices erfolgt häufig gleichzeitig von vielen Anwendungsclients und in kurzen zeitlichen Abständen. Für den Anwendungsserver, auf den ein betreffender Webservice bereitgestellt wird, bedeutet es daher eine große Entlastung, wenn bei jedem Aufruf auch die Informationen bezüglich einer gültigen Lizenz mitgeliefert werden.

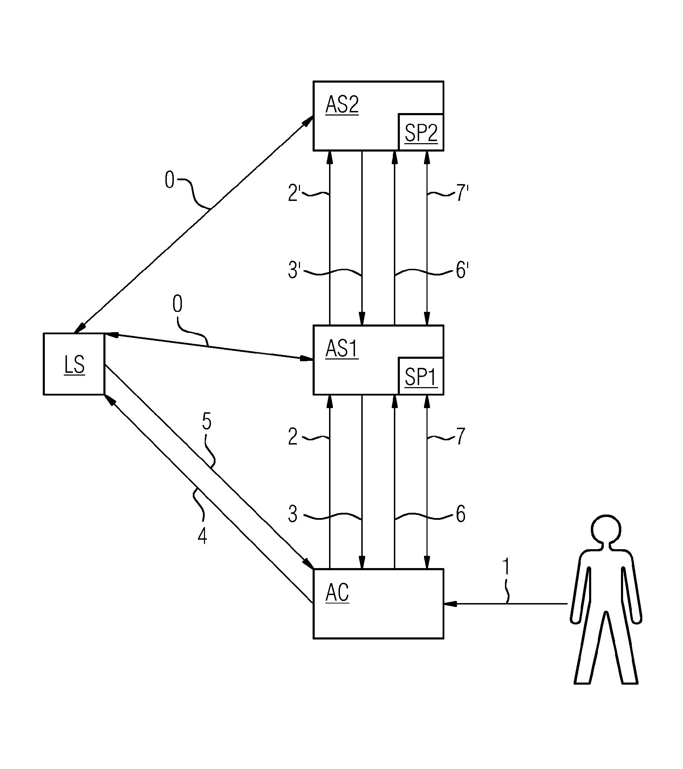

Die Erfindung wird nachfolgend anhand eines Ausführungsbeispiels näher beschrieben. Dabei zeigt die Figur einen Lizenzserver LS, einen Anwendungsclient AC, einen ersten Anwendungsserver AS1 sowie einen zweiten Anwendungsserver AS2, die über ein Computernetzwerk miteinander verbindbar bzw. verbunden sind. Auf den Anwendungsservern AS1 und AS2 werden Softwareprodukte SP1 bzw. SP2 bereitgestellt, zum Beispiel in Form von Webservices. Es wird zunächst zur Konfiguration des aufgezeigten Computersystems ein Vertrauensverhältnis zwischen dem Lizenzserver LS und den beiden Anwendungsservern AS1 und AS2 aufgebaut. In der Figur ist dies durch die mit dem Bezugszeichen "0" versehenen Doppelpfeile veranschaulicht. Bei der Konfiguration erhalten die Anwendungsserver AS1 und AS2 den öffentlichen Schlüssel (das öffentliche Zertifikat), mit dem der Lizenzserver Dateien elektronisch signiert, und können damit später die Echtheit der von dem Lizenzserver signierten Lizenztoken überprüfen.

In einem ersten Schritt 1 nutzt ein autorisierter menschlicher Benutzer eine Funktion des Anwendungsclients AC, beispielsweise durch Benutzereingaben mittels einer Tastatur. Alternativ wäre es auch denkbar, dass - ohne Eingriff eines menschlichen Benutzers - eine Software eine Funktion des Anwendungsclient AC nutzt. Die Funktion macht einen Aufruf eines auf dem ersten Anwendungsserver AS1 bereitgestellten Softwareprodukts (Webservices) SP1 erforderlich (Schritt 2). In einem dritten Schritt 3 antwortet der Anwendungsserver AS1 mit einer Liste der benötigten Lizenzen und überträgt diesbezügliche Daten an den Anwendungsclient AC. In einem vierten Schritt 4 fordert der Anwendungsclient AC Daten bezüglich der benötigten Lizenzen bei dem Lizenzserver LS an. Der Lizenzserver LS erstellt daraufhin ein Lizenztoken, aus dem die Lizenz und damit die Zugriffsrechte des Anwendungsclients AC in Bezug auf das Softwareprodukt SP1 hervorgehen. Dieses Lizenztoken wird von dem Lizenzserver LS elektronisch signiert, insbesondere unter Verwendung seines geheimen Signaturschlüssels, und in Schritt 5 an den Anwendungsclient AC übertragen. Im Schritt 6 erfolgt nun ein zweiter Aufruf des Softwareprodukts SP1 durch den Anwendungsclient AC, wobei mit diesem Aufruf das elektronisch signierte Lizenztoken mitgeliefert wird. Nachfolgend überprüft der erste Anwendungsserver AS1 die Gültigkeit der im Lizenztoken aufgeführten Lizenz mittels des öffentlichen Signaturschlüssels des Lizenzservers LS. Ist die erforderliche Lizenz vorhanden, so wird dem Anwendungsclient AC die Zugriffsberechtigung auf das Softwareprodukt SP1 erteilt (Schritt 7). Nach der Konfiguration ist damit zum Überprüfen der Lizenz in Folge eines Aufrufs des Softwareproduktes SP1 keine Verbindung zwischen dem Lizenzserver LS und dem Anwendungsserver AS1 erforderlich.

Befindet sich das von dem Anwendungsclient AC aufgerufene Softwareprodukt nicht auf dem in direkter Verbindung mit dem Anwendungsclient AC stehenden ersten Anwendungsserver AS1, sondern auf einem zweiten Anwendungsserver AS2, so kann die aufgezeigte Vorgehensweise wie folgt erweitert werden: Erkennt der erste Anwendungsserver AS1, dass ein von dem Anwendungsclient AC aufgerufenes zweites Softwareprodukt SP2 nicht auf dem ersten Anwendungsserver AS1, sondern auf dem zweiten Anwendungsserver AS2 gespeichert ist, so leitet dieser den von dem Anwendungsclient AC stammenden Aufruf in einem Schritt 2' an den zweiten Anwendungsserver AS2 weiter. Dieser übermittelt im Schritt 3' Informationen bezüglich der für den Zugriff benötigten Lizenzen an den ersten Anwendungsserver AS1 und die zuvor geschilderte Folge von Datenübertragungen nimmt ihren Lauf, so lange, bis der erstellte und elektronisch signierte Lizenztoken im Schritt 6' bei dem zweiten Anwendungsserver AS2 landet. Dieser überprüft schließlich mittels des öffentlichen Signaturschlüssels des Lizenzservers LS die Gültigkeit des übertragenen Lizenztokens und gibt im Falle einer vorhandenen Lizenz des Anwendungsclients AC bezüglich des Softwareprodukts SP2 den Zugriff über den Anwendungsserver AS1 auf den Anwendungsserver AS2 frei (Schritte 7 und 7') .

Selbstverständlich kann die zuletzt für den Fall von zwei Anwendungsservern AS1 und AS2 gezeigte Vorgehensweise analog auf beliebig viele Anwendungsserver erweitert werden.

## Patentansprüche

1. Verfahren zur Erteilung einer Zugriffsberechtigung für ein auf einem Anwendungsserver (AS1, AS2) bereitgestelltes Softwareprodukt (SP1, SP2) mit folgenden Schritten:
- Aufruf des Softwareproduktes (SP1, SP2) durch einen Anwendungsclient (AC),
- Anfordern wenigstens einer für einen Zugriff auf das Softwareprodukt (SP1, SP2) erforderlichen Lizenz von dem Anwendungsclient (AC) durch den Anwendungsserver (AS1, AS2),
- Anfordern der erforderlichen Lizenz von einem Lizenzserver (LS) durch den Anwendungsclient (AC),
- Erstellen eines elektronisch signierten Lizenztokens durch den Lizenzserver (LS) und Übermitteln des von dem Lizenzserver (LS) elektronisch signierten Lizenztokens an den Anwendungsclient (AC),
- Übermitteln des elektronisch signierten Lizenztokens von dem Anwendungsclient (AC) an den Anwendungsserver (AS1, AS2),
- Überprüfen des übermittelten, elektronisch signierten Lizenztokens durch den Anwendungsserver (AS1, AS2) und Erteilen der Zugriffsberechtigung für den Zugriff des Anwendungsclients (AC) auf das Softwareprodukt (SP1, SP2) im Falle einer gültigen Lizenz.

2. Verfahren nach Anspruch 1, wobei der Lizenzserver (LS) zur elektronischen Signatur des Lizenztokens einen geheimen Signaturschlüssel verwendet und der Anwendungsserver (AS1, AS2) den Lizenztoken mittels eines öffentlichen Signaturschlüssels des Lizenzservers (LS) verifiziert.

3. Verfahren nach Anspruch 2, wobei der öffentliche Signaturschlüssel zusammen mit dem elektronisch signierten Lizenztoken von dem Lizenzserver (LS) über den Anwendungsclient (AC) zu dem Anwendungsserver (AS1, AS2) übertragen wird.

4. Verfahren nach Anspruch einem der Ansprüche 1 bis 3, wobei der Anwendungsclient (AC) den Aufruf des Softwareproduktes (SP2) an einen ersten Anwendungsserver (AS1) richtet, wobei der erste Anwendungsserver (AS1) den Aufruf an einen zweiten Anwendungsserver (AS2) weiterleitet, wobei das Softwareprodukt (SP2) auf dem zweiten Anwendungsserver (AS2) bereitgestellt ist, wobei der zweite Anwendungsserver (AS2) die für den Zugriff erforderliche Lizenz von dem ersten Anwendungsserver (AS1) anfordert, wobei der erste Anwendungsserver (AS1) die erforderliche Lizenz von dem Anwendungsclient (AC) anfordert, wobei der Anwendungsclient (AC) das signierte Lizenztoken an den ersten Anwendungsserver (AS1) übermittelt, wobei der erste Anwendungsserver (AS1) das signierte Lizenztoken an den zweiten Anwendungsserver (AS2) übermittelt, wobei der zweite Anwendungsserver (AS2) das übermittelte, elektronisch signierte Lizenztoken überprüft und dem Anwendungsclient (AC) im Falle einer gültigen Lizenz die Zugriffsberechtigung für den Zugriff auf das Softwareprodukt (SP2) erteilt.

5. Verfahren nach einem der vorherigen Ansprüche, wobei in dem Lizenztoken die Lizenz betreffende Eigenschaften, wie ein Ablaufdatum oder die Einschränkung der Lizenz auf bestimmte Funktionen des Softwareproduktes (SP1, SP2), enthalten sind.

6. Verfahren nach einem der vorherigen Ansprüche, wobei dem Anwendungsserver (AS1) bzw. den Anwendungsservern (AS1, AS2) und dem Lizenzserver (LS) einmalig ein Vertrauensverhältnis aufgebaut wird.

7. Verfahren nach einem der vorherigen Ansprüche, wobei es sich bei dem Softwareprodukt (SP1, SP2) um einen Web Service handelt.

8. Computersystem, umfassend wenigstens einen Anwendungsserver (AS1, AS2), einen Anwendungsclient (AC) und einen Lizenzserver (LS), zur Durchführung eines Verfahrens nach einem der Ansprüche 1 bis 7.
